# EUROPÄISCHE PATENTSCHRIFT

(11) **EP 2 217 407 B1**
(45) Veröffentlichungstag und Bekanntmachung des Hinweises auf die Patenterteilung: **02.08.2017**
(21) Anmeldenummer: 08847820.1
(22) Anmeldetag: 10.10.2008
(51) Int. Cl.: H02K 7/14, B25F 5/00

(54) **ELEKTROWERKZEUGMASCHINE MIT EINEM ELEKTROMOTOR**
ELECTRIC MACHINE TOOL HAVING AN ELECTRIC MOTOR
MACHINE-OUTIL ÉLECTRIQUE ÉQUIPÉE D'UN MOTEUR ÉLECTRIQUE

(30) Priorität: 08.11.2007 DE 102007053308
(43) Veröffentlichungstag der Anmeldung: 18.08.2010
(73) Patentinhaber: Robert Bosch GmbH, 70442 Stuttgart (DE)
(72) Erfinder: ESENWEIN, Florian, 73066 Uhingen-Holzhausen (DE); WASSERMANN, Peter, 71263 Weil Der Stadt (DE)
(86) Internationale Anmeldenummer: PCT/EP2008/063596
(87) Internationale Veröffentlichungsnummer: WO 2009/059863

(56) Entgegenhaltungen:
- EP-A- 0 569 738
- EP-A- 1 398 865
- DE-A1- 4 238 564
- DE-A1- 19 924 552
- DE-A1-102006 041 122
- FR-A- 1 187 570
- GB-A- 1 391 957
- JP-A- 2002 010 575
- US-A- 1 476 776
- US-A- 4 142 120
- US-A1- 2006 055 254
- US-A1- 2006 266 538

## Beschreibung

### Stand der Technik

Die Erfindung geht aus von einer Elektrowerkzeugmaschine mit einem Elektromotor nach dem Oberbegriff des Anspruchs 1.

Bei Elektrowerkzeugen wird zur Kühlung des Elektromotors in der Regel eine Luftkühlung eingesetzt. Über einen Lüfter oder eine sonstige Vorrichtung wird ein Luftstrom erzeugt, der unter anderem um den Anker und das Feldeisen des Elektromotors strömt. Es wurde auch schon vorgeschlagen, durch zusätzliche Strömungen oder Rückströmungen bestimmte Teile des Elektrowerkzeugs zusätzlich zu kühlen, wie etwa den Wickelkopf oder den Kollektor.

Aus der DE 102 61 572 A1 ist beispielsweise bekannt, Maschinenkomponenten anzuströmen, die außerhalb oder in einem strömungsarmen Bereich des Kühlluftstroms liegen.

Die US-A-1 476 776 offenbart einen Elektromotor, der in einer Elektrowerkzeugmaschine eingesetzt werden kann, bei dem mittels eines ersten Lüfterrades Kühlluft über einen ersten Kühlluftkanal zur Kühlung eines Feldeisenpakets geleitet wird. Der Kühlluftstrom wird dabei zentral von außen stromauf des ersten Kühlluftkanals angesaugt. Mittels eines zweiten Lüfterrades kühlt der Luftstrom in Serie - und vermengt mit einem zweiten Kühlluftstrom - den Anker und wird radial stromab des zweiten Kühlluftkanals abgeleitet.

### Offenbarung der Erfindung

Die Erfindung geht aus von einer Elektrowerkzeugmaschine, insbesondere einem Winkelschleifer, mit einem Elektromotor, der durch einen Kühlluftstrom zwangskühlbar ist, wobei der Elektromotor einen Anker und ein konzentrisch zum Anker angeordnetes Feldeisenpaket aufweist, wobei Anker und Feldeisenpaket in einem Kühlluftstrom angeordnet sind, der durch ein Lüfterrad erzeugbar ist.

Es wird vorgeschlagen, dass der Anker und das Feldeisenpaket im Kühlluftstrom des einzigen Lüfterrads in einem Kühlkanal des einzigen Lüfterrads in Serie angeordnet sind wobei eine strömungsmäßige Trennung zwischen einem ersten Kühlkanalabschnitt und einem zweiten Kühlkanalabschnitt vorgesehen ist. Ein Saugbereich ist zum Ansaugen von Kühlluft an einem stromabseitigen Ende des zweiten Kühlkanalabschnitts angeordnet. Die Kühlluft, die durch den ersten Kühlkanalabschnitt strömt, ist durch wenigstens einen Kühllufteingang angesaugt, der benachbart zu einem stromaufwärtigen Ende des ersten Kühlabschnitts angeordnet ist.

Die Trennung kann z.B. ein Luftleitring sein, der sich vorteilhaft von dem Saugbereich, etwa eines Lüfters, zu dem Feldeisenpaket erstrecken kann.

Bevorzugt ist der Saugbereich benachbart zum Anker angeordnet, etwa wenn ein Lüfterrad auf der Welle des Ankers angeordnet ist und die Ansaugung des Kühlluftstroms bewirkt. Eine kompakte Bauweise ergibt sich, wenn der wenigstens eine Kühllufteingang benachbart zum Anker ist.

Durch die strömungsmäßige Serienanordnung kann die Kühlung des Ankers verbessert werden. Die Kühlung des Elektromotors wird zugunsten des Ankers verschoben und die Kühlung der verschiedenen Elektromotorkomponenten besser ausbalanciert. Eine kritische Temperatur des Ankers wird erst bei höheren Belastungen erreicht, so dass die Nennleistung erhöht werden kann. Ferner wird die Überlastverträglichkeit des Elektromotors verbessert. Die verbesserte Kühlung des Ankers erlaubt eine erhöhte Leistungsausbeute bei gleichbleibender Motorgröße oder bei gleicher Leistungsausbeute eine kleinere Motorgröße.

Die effektivere und besser ausbalancierte Kühlung führt zu einer insgesamt verbesserten Kühlung bei gleichzeitig geringerem Gesamtvolumenstrom. Dies bedeutet gleichzeitig mehr Komfort und weniger Geräusch (akustische Probleme). Im Umkehrschluss ergibt sich die Möglichkeit, einen leistungsfähigeren Lüfter einzusetzen und damit die Kühlung nochmals zu verbessern, ohne das bisherige Geräuschniveau zu erhöhen.

An einem Übergang vom ersten in den zweiten Kühlkanalabschnitt kann vorteilhaft eine Strömungsumkehr zwischen dem ersten Kühlkanalabschnitt und dem zweiten Kühlkanalabschnitt vorgesehen sein.

Der Anker und ein bezogen auf eine Drehachse des Ankers radial äußerer Bereich des Feldeisenpakets können gegensinnig vom Kühlluftstrom angeströmt sein.

In einer vorteilhaften Weiterbildung kann das Feldeisenpaket strömungsmäßig vor dem Anker angeordnet sein. In diesem Fall kann das Feldeisenpaket mit frischer und kühler Kühlluft überströmt werden, und der gesamte Kühlluftstrom muss durch das Motorinnere, nämlich den Kühlkanalabschnitt zwischen Feldeisenpaket und Anker strömen. Der Kühlluftstrom im Motorinneren kann somit deutlich erhöht werden. Dadurch erhält der Anker eine besonders effektive Kühlung.

Vorteilhaft ist zudem, dass der Kühlluftstrom in erster Linie im Bereich des Elektromotors anzutreffen ist. Im Vergleich zu bekannten Bauweisen muss die Kühlluft nicht entlang von elektronischen Komponenten, wie etwa Kondensatoren, Schaltern und dergleichen strömen, sondern lediglich im Bereich des Elektromotors. Bei der bisherigen Bauweisen können sich insbesondere in der Kühlluft mitgeführte Metallstäube an den elektronischen Komponenten anlagern und zu Beeinträchtigungen der Funktion führen, etwa durch Bildung elektrischer Brücken und dergleichen. Alternativ kann der Anker strömungsmäßig vor dem Feldeisenpaket angeordnet sein.

In günstiger Weiterbildung können der erste Kühlkanalabschnitt zwischen Gerätegehäuse und Feldeisenpaket und der zweite Kühlkanalabschnitt zwischen Feldeisenpaket und Anker vorgesehen sein. Das Feldeisenpaket kann Platz sparend als weitere Trennung zwischen dem ersten und zweiten Kühlkanalabschnitt fungieren.

Besonders vorteilhaft kann die durch den wenigstens einen Kühllufteingang angesaugte Kühlluft mit einem entfernt von dem wenigstens einen Kühllufteingang angesaugten Kühlluftstrom vereinigt und durch den zweiten Kühlkanalabschnitt geleitet sein.

Die Erfindung ist besonders für Elektrowerkzeugmaschinen geeignet, mit denen abrasiv gearbeitet wird und bei denen insbesondere mit Metallpartikeln beladene Stäube in den Kühlluftstrom gelangen können.

### Kurze Beschreibung der Zeichnungen

### Zeichnung

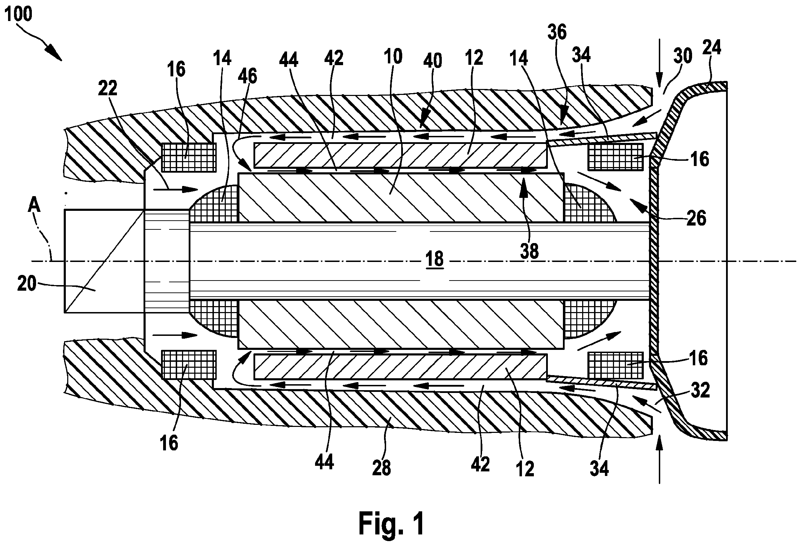

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt einen Teilaufriss eines Ausschnitts einer bevorzugten Elektrowerkzeugmaschine, z.B. eines bevorzugten Winkelschleifers.

### Ausführungsform der Erfindung

Die Erfindung geht aus von einer Elektrowerkzeugmaschine, insbesondere einem Winkelschleifer, mit einem Elektromotor, der durch einen Kühlluftstrom zwangskühlbar ist, wobei der Elektromotor einen Anker und ein konzentrisch zum Anker angeordnetes Feldeisenpaket aufweist, wobei Anker und Feldeisenpaket in einem Kühlluftstrom angeordnet sind, wobei vorgeschlagen wird, dass der Anker und das Feldeisenpaket im Kühlluftstrom in Serie angeordnet sind.

Zur näheren Erläuterung der Erfindung zeigt die Figur eine bevorzugte Elektrowerkzeugmaschine 100 mit einem in einem Gerätegehäuse 28 angeordneten Elektromotor, der durch einen Kühlluftstrom zwangskühlbar ist. Der Elektromotor weist neben nicht dargestellten weiteren üblichen Motorkomponenten einen Anker 10 und ein konzentrisch zum Anker 10 angeordnetes Feldeisenpaket 12 auf mit jeweils axial stirnseitig angeordneten Wickelköpfen 14 bzw. 16 auf. Der Anker 10 sitzt auf einer Welle 18 mit einer Drehachse A. Auf der Welle 18 ist ein Lüfterrad 24 angeordnet, das Kühlluft ansaugt, sobald die Welle 18 dreht. An der dem Lüfterrad 24 entgegengesetzten Seite des Ankers 10 ist ein Kollektor 20 angeordnet sowie weitere, nicht dargestellte Gerätekomponenten, die dem Fachmann vertraut sind, wie Elektronik, Getriebe etc.

Der Anker 10 und das konzentrisch um das Feldeisenpaket 12 sind in einem durch Pfeile angedeuteten Kühlluftstrom angeordnet, wobei zunächst das Feldeisenpaket 12 mit frischer Kühlluft und dann der Anker 10 mit der Kühlluft überströmt wird. Der Anker 10 und das Feldeisenpaket 12 sind diesbezüglich im Kühlluftstrom in Serie angeordnet, wobei in dem gezeigten Ausführungsbeispiel das Feldeisenpaket 12 strömungsmäßig vordem Anker 10 angeordnet ist.

Dabei sind der Anker 10 und das Feldeisenpaket 12 in einem Kühlkanal 40 innerhalb des Gerätegehäuses 28 angeordnet, in dem eine strömungsmäßige Trennung 34 zwischen einem ersten Kühlkanalabschnitt 42 und einem zweiten Kühlkanalabschnitt 44 vorgesehen ist. Die Trennung 34 kann z.B. als Luftleitring ausgebildet sein, der sich vom Lüfterrad 24 zu der dem Lüfterrad 24 zugewandten Stirnseite des Feldeisenpakets 12 erstreckt. Der erste Kühlkanalabschnitt 42 verläuft zwischen der Gerätegehäuse 28 und dem Feldeisenpaket 12, der zweite Kühlkanalabschnitt 44 verläuft zwischen dem Feldeisenpaket 12 und dem Anker 10.

Ein Saugbereich 26 zum Ansaugen von Kühlluft ist an einem stromabseitigen Ende 38 des zweiten Kühlkanalabschnitts 44 angeordnet, wobei sich der Saugbereich 26 benachbart zum Anker 10 auf der Höhe seines Wickelkopfs 14 befindet. Die Kühlluft, die durch den ersten Kühlkanalabschnitt 42 strömt, ist durch wenigstens einen Kühllufteingang 30, 32 angesaugt, der benachbart zu einem stromaufwärtigen Ende 36 des ersten Kühlabschnitts 42 und benachbart zum Anker 10 bzw. dem stromabwärtigen Ende 38 des zweiten Kühlkanalabschnitts 44 angeordnet ist.

An einem Übergang 46 vom ersten Kühlkanalabschnitt 42 in den zweiten Kühlkanalabschnitt 44 erfolgt eine Strömungsumkehr zwischen dem ersten Kühlkanalabschnitt 42 und dem zweiten Kühlkanalabschnitt 44. Dabei kann die durch den wenigstens einen Kühllufteingang 30, 32 angesaugte Kühlluft mit einem entfernt von dem wenigstens einen Kühllufteingang 30, 32 angesaugten Kühlluftstrom 22 vereinigt und durch den zweiten Kühlkanalabschnitt 44 geleitet werden. Der Kühlluftstrom 22 ist durch einen Pfeil angedeutet. Der gesamte Kühlluftstrom wird damit durch den zweiten Kühlkanalabschnitt 44 gezwungen, womit der Anker 10 durch eine zuverlässig hohe Wärmeabfuhr erfährt.

## Patentansprüche

1. Elektrowerkzeugmaschine, insbesondere Winkelschleifer, mit einem Elektromotor, der durch einen Kühlluftstrom zwangskühlbar ist, wobei der Elektromotor einen Anker (10) und ein konzentrisch zum Anker (10) angeordnetes Feldeisenpaket (12) aufweist, wobei Anker (10) und Feldeisenpaket (12) in einem Kühlluftstrom, der durch ein Lüfterrad (24) erzeugbar ist, angeordnet sind, **dadurch gekennzeichnet, dass** der Anker (10) und das Feldeisenpaket (12) im Kühlluftstrom in einem Kühlkanal (40) des einzigen Lüfterrads (24) in Serie angeordnet sind, und eine strömungsmäßige Trennung (34) zwischen einem ersten Kühlkanalabschnitt (42) und einem zweiten Kühlkanalabschnitt (44) des Kühlkanals (40) vorgesehen ist, wobei ein Saugbereich (26) des Lüfterrads (24) zum Ansaugen von Kühlluft an einem stromabseitigen Ende (38) des zweiten Kühlkanalabschnitts (44) angeordnet ist und Kühlluft, die durch den ersten Kühlkanalabschnitt (42) strömt, durch wenigstens einen Kühllufteingang (30,32) angesaugt ist, der benachbart zu einem stromaufwärtigen Ende (36) des ersten Kühlabschnitts (42) angeordnet ist.

2. Elektrowerkzeugmaschine nach Anspruch 1, **dadurch gekennzeichnet, dass** an einem Übergang (46) vom ersten in den zweiten Kühlkanalabschnitt (42, 44) eine Strömungsumkehr zwischen dem ersten Kühlkanalabschnitt (42) und dem zweiten Kühlkanalabschnitt (44) vorgesehen ist.

3. Elektrowerkzeugmaschine nach einem der vorhergehenden Ansprüche, **dadurch gekennzeichnet, dass** der Anker (10) und ein bezogen auf eine Drehachse (A) des Ankers (10) radial äußerer Bereich des Feldeisenpakets (12) gegensinnig vom Kühlluftstrom angeströmt sind.

4. Elektrowerkzeugmaschine nach einem der vorhergehenden Ansprüche, **dadurch gekennzeichnet, dass** das Feldeisenpaket (12) strömungsmäßig vor dem Anker (10) angeordnet ist.

5. Elektrowerkzeugmaschine nach einem der Ansprüche 1 bis 3, **dadurch gekennzeichnet, dass** der Anker (10) strömungsmäßig vor dem Feldeisenpaket (12) angeordnet ist.

6. Elektrowerkzeugmaschine nach einem der vorhergehenden Ansprüche, **dadurch gekennzeichnet, dass** der erste Kühlkanalabschnitt (42) zwischen Gerätegehäuse (28) und Feldeisenpaket (12) und der zweite Kühlkanalabschnitt (44) zwischen Feldeisenpaket (12) und Anker (10) vorgesehen ist.

7. Elektrowerkzeugmaschine nach einem der vorhergehenden Ansprüche, **dadurch gekennzeichnet, dass** die durch den wenigstens einen Kühllufteingang (30, 32) angesaugte Kühlluft mit einem entfernt von dem wenigstens einen Kühllufteingang (30, 32) angesaugten Kühlluftstrom vereinigt und durch den zweiten Kühlkanalabschnitt (44) geleitet ist.

## Claims

1. Electric power tool, in particular angle grinder, having an electric motor which is able to be force cooled by a cooling air flow, wherein the electric motor has an armature (10) and a field iron packet (12) arranged concentrically with the armature (10), wherein the armature (10) and field iron packet (12) are arranged in a cooling air flow which is able to be generated by a fan wheel (24), **characterized in that** the armature (10) and the field iron packet (12) are arranged in series in the cooling air flow in a cooling duct (40) of the single fan wheel (24), and a separation (34) in terms of flow is provided between a first cooling duct portion (42) and a second cooling duct portion (44) of the cooling duct (40), wherein a suction region (26) of the fan wheel (24) for drawing in cooling air is arranged at a downstream end (38) of the second cooling duct portion (44) and cooling air which flows through the first cooling duct portion (42) is drawn in through at least one cooling air inlet (30, 32) which is arranged next to an upstream end (36) of the first cooling portion (42).

2. Electric power tool according to Claim 1, **characterized in that** a flow reversal between the first cooling duct portion (42) and the second cooling duct portion (44) is provided at a transition (46) from the first cooling duct portion (42) into the second (44).

3. Electric power tool according to either of the preceding claims, **characterized in that** the cooling air flow flows in opposite directions against the armature (10) and a radially external region of the field iron packet (12) with respect to the axis of rotation (A) of the armature (10).

4. Electric power tool according to one of the preceding claims, **characterized in that** the field iron packet (12) is arranged upstream of the armature (10) in terms of flow.

5. Electric power tool according to one of Claims 1 to 3, **characterized in that** the armature (10) is arranged upstream of the field iron packet (12) in terms of flow.

6. Electric power tool according to one of the preceding claims, **characterized in that** the first cooling duct portion (42) is provided between the device housing (28) and field iron packet (12), and the second cooling duct portion (44) is provided between the field iron packet (12) and armature (10).

7. Electric power tool according to one of the preceding claims, **characterized in that** the cooling air drawn in through the at least one cooling air inlet (30, 32) is combined with a cooling air flow drawn in remotely from the at least one cooling air inlet (30, 32), and is passed through the second cooling duct portion (44).

## Revendications

1. Machine-outil électrique, en particulier meuleuse d'angle, avec un moteur électrique qui peut être refroidi de façon forcée par un flux d'air de refroidissement, le moteur électrique présentant un induit (10) et un empilage de tôles d'inducteur (12) disposé de façon concentrique à l'induit (10), l'induit (10) et l'empilage de tôles d'inducteur (12) étant disposés dans un flux d'air de refroidissement qui peut être produit par une roue de ventilateur (24), **caractérisée en ce que** l'induit (10) et l'empilage de tôles d'inducteur (12) sont disposés en série dans le flux d'air de refroidissement dans un canal de refroidissement (40) de l'unique roue de ventilateur (24), et une séparation (34) fluidique étant prévue entre un premier tronçon de canal de refroidissement (42) et un deuxième tronçon de canal de refroidissement (44) du canal de refroidissement (40), une zone d'aspiration (26) de la roue de ventilateur (24) étant disposée pour l'aspiration d'air de refroidissement sur une extrémité (38) côté aval du deuxième tronçon de canal de refroidissement (44), et l'air de refroidissement qui s'écoule à travers le premier tronçon de canal de refroidissement (42) est aspiré à travers au moins une entrée d'air de refroidissement (30, 32) qui est disposée au voisinage d'une extrémité (36) côté amont du premier tronçon de refroidissement (42).

2. Machine-outil électrique selon la revendication 1, **caractérisée en ce que**, à une transition (46) du premier vers le deuxième tronçon de canal de refroidissement (42, 44), il est prévu une inversion d'écoulement entre le premier tronçon de canal de refroidissement (42) et le deuxième tronçon de canal de refroidissement (44).

3. Machine-outil électrique selon l'une des revendications précédentes, **caractérisée en ce que** l'induit (10) et une zone de l'empilage de tôles d'inducteur (12) radialement extérieure rapportée à un axe de rotation (A) de l'induit (10) sont balayés en sens contraire par le flux d'air de refroidissement.

4. Machine-outil électrique selon l'une des revendications précédentes, **caractérisée en ce que** l'empilage de tôles d'inducteur (12) est, fluidiquement, disposé en amont de l'induit (10).

5. Machine-outil électrique selon l'une des revendications 1 à 3, **caractérisée en ce que** l'induit (10) est, fluidiquement, disposé en amont de l'empilage de tôles d'inducteur (12).

6. Machine-outil électrique selon l'une des revendications précédentes, **caractérisée en ce que** le premier tronçon de canal de refroidissement (42) est prévu entre le boîtier d'appareil (28) et l'empilage de tôles d'inducteur (12), et le deuxième tronçon de canal de refroidissement (44) est prévu entre l'empilage de tôles d'inducteur (12) et l'induit (10).

7. Machine-outil électrique selon l'une des revendications précédentes, **caractérisée en ce que** l'air de refroidissement aspiré à travers l'entrée d'air de refroidissement (30, 32) au moins au nombre de un est réuni à un flux d'air de refroidissement aspiré à distance de l'entrée d'air de refroidissement (30, 32) au moins au nombre de un et est conduit à travers le deuxième tronçon de canal de refroidissement (44).
